# EUROPEAN PATENT APPLICATION

(11) **EP 2 282 464 A1**
(43) Date of publication of application: **09.02.2011**
(21) Application number: 10169364.6
(22) Date of filing: 13.07.2010
(51) Int. Cl.: H04L 12/58, H04M 1/725

(54) **Apparatus and method for providing conversational message service in portable communication system**

(30) Priority: 24.07.2009 KR 20090067688
(71) Applicant: Samsung Electronics Co., Ltd., Suwon-si, Gyeonggi-do (KR)
(72) Inventor: Choi, Pil-Sik, Gyeonggi-do (KR)
(74) Representative: Jenkins, Richard Gavin

(57) **Abstract**

An apparatus and method for a Conversational Message (CM) function of a mobile communication system are provided. The apparatus includes a CM manager for defining information indicating a start and end of a CM function and information regarding a folder for storing message data exchanged with a peer portable terminal in a message to be transmitted, and for transmitting the defined message to the peer terminal. Accordingly, the CM function is improved by transmitting information for announcing that a CM is transmitted in a message transmission process to enable rapid response processing and by granting an access right on stored data when performing the CM function.

## Description

### BACKGROUND OF THE INVENTION

### 1. Field of the Invention:

The present invention relates to an apparatus and method for a Conversational Message (CM) function of a mobile communication system. More particularly, the present invention relates to an apparatus and method for transmitting information for announcing that a CM is transmitted in a message transmission process to enable rapid response processing and for granting an access right on stored data when performing the CM function.

### 2. Description of the Related Art:

Portable terminals have become necessities of modern life for people of all ages. Thus, service providers and terminal manufacturers have competitively developed differentiated products (or services).

For example, the portable terminal has been developed into a multimedia device capable of providing various services such as phonebooks, games, short messages, Electronic mail (E-mail), wake-up calls, Moving Picture Experts Group (MPEG)-1 Audio Layer 3 (MP3) players, digital cameras, a radio broadcast listening function, and the like.

Such a portable terminal has various advantages. For example, mobility is provided to a user during communication. Due to the mobility, the number of subscribers of wireless communication has been increased and the portable terminal is widely used. A Short Messaging Service (SMS), i.e., a service for exchanging short text messages from one portable terminal to another, is popular since a telephony path is not directly used, its implementation and usage are easy, and various additional services can be provided.

A Conversational Message (CM) function has recently been developed to obtain the same effect as an instant messaging function by using the SMS and a Multimedia Messaging Service (MMS).

The CM function provides the same experience as a real-time conversation by managing a list of messages transmitted and received for each user so that the messages can be written easily and rapidly.

However, the CM function has a problem in that a user of the CM function cannot be selected, and a message list has to be managed unnecessarily for all messages.

Also, when transmitting a message to a peer user, a user who has transmitted the message cannot receive a response rapidly from the peer user since there is no function of announcing that it is a CM mode.

Still, there is another problem in that the CM function does not allow the user to directly set up a folder (e.g., a folder name, a folder image, and the like) for storing a received message, which results in inconvenience in message management for each user.

Therefore, a need exists for an apparatus for announcing a CM transmitted in a message and for setting up a folder for storing a received message.

### SUMMARY OF THE INVENTION

An aspect of the present invention is to address at least the above-mentioned problems and/or disadvantages and to provide at least the advantages described below. Accordingly, an aspect of the present invention is to provide an apparatus and method for providing an improved Conversational Message (CM) function in a mobile communication system.

Another aspect of the present invention is to provide an apparatus and method for transmitting information for announcing that a CM is transmitted in a message transmission process in a mobile communication system.

Another aspect of the present invention is to provide an apparatus and method for storing data generated by performing a CM function in a mobile communication system.

Another aspect of the present invention is to provide an apparatus and method for granting an access right on stored data when performing a CM function in a mobile communication system.

In accordance with an aspect of the present invention, an apparatus for transmitting a CM in a portable terminal is provided. The apparatus includes a CM manager for defining information indicating a start and end of a CM function and information regarding a folder for storing message data exchanged with a peer portable terminal in a message to be transmitted, and for transmitting the defined message to the peer terminal.

In accordance with another aspect of the present invention, an apparatus for receiving a CM in a portable terminal is provided. The apparatus includes a CM manager for creating a folder for storing the CM by analyzing CM information included in a received message, and for storing the CM transmitted and received.

In accordance with still another aspect of the present invention, a method of transmitting a CM in a portable terminal is provided. The method includes defining information indicating a start and end of a CM function and information regarding a folder for storing message data exchanged with a peer portable terminal in a message to be transmitted, and transmitting the defined message to the peer terminal.

In accordance with yet another aspect of the present invention, a method of receiving a CM in a portable terminal is provided. The method includes creating a folder for storing the CM by analyzing CM information included in a received message, and storing the CM transmitted and received in the created folder.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following description taken in conjunction with the accompanying drawings, in which:

FIG. 1 is a block diagram illustrating a structure of a portable terminal for providing a Conversational Message (CM) function according to an exemplary embodiment of the present invention;

FIG. 2 is a flowchart illustrating a process of performing a CM function in a portable terminal according to an exemplary embodiment of the present invention;

FIG. 3 is a flowchart illustrating a CM reception process in a portable terminal according to an exemplary embodiment of the present invention;

FIG. 4 is a flowchart illustrating a process of accessing a folder in which CM data is stored in a portable terminal according to an exemplary embodiment of the present invention;

FIG. 5A illustrates a process of performing a CM service in a mobile communication system according to an exemplary embodiment of the present invention; and

FIG. 5B illustrates a process of performing an operation corresponding to CM information in a mobile communication system according to an exemplary embodiment of the present invention.

Throughout the drawings, like reference numerals will be understood to refer to like parts, components and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention are provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

Exemplary embodiments of the present invention provide an apparatus and method for providing an improved Conversational Message (CM) function by transmitting information for announcing that a CM is transmitted in a message transmission process to enable rapid response processing and by granting an access right on stored data when performing the CM function.

An exemplary portable terminal described below refers to a wireless terminal capable of transmitting/receiving voice, text, video data and the like. Examples of the wireless terminal include a mobile communication terminal, a Personal Digital Assistant (PDA), a smart phone, a next-generation mobile communication terminal, a Wireless Local Area Network (WLAN) terminal, and the like.

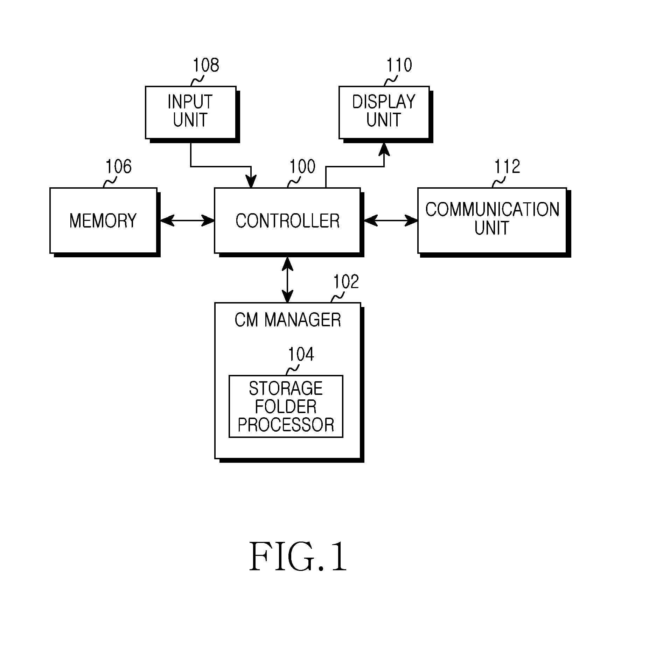

FIG. 1 is a block diagram illustrating a structure of a portable terminal for providing a CM function according to an exemplary embodiment of the present invention.

Referring to FIG. 1, the portable terminal includes a controller 100, a CM manager 102, a memory 106, an input unit 108, a display unit 110, and a communication unit 112. The CM manager 102 includes a storage folder processor 104.

The controller 100 provides overall control to the portable terminal. For example, the controller 100 processes and controls voice telephony and data communication. In an exemplary implementation the controller 100 also provides an improved CM function by transmitting information for announcing that a CM is transmitted in a message transmission process to enable rapid response processing and by granting an access right on stored data when performing the CM function.

That is, the controller 100 controls the CM manager 102 to generate a message to be transmitted by defining CM information when performing the CM function, and to create a folder for storing a message to be transmitted and received with respect to a peer terminal, to store the transmitted and received CM.

The CM manager 102 processes an overall CM function under the instruction of the controller 100.

When the CM is transmitted using the portable terminal, the CM manager 102 generates a message to be transmitted by defining the CM information, and creates the folder for storing the message to be transmitted and received with respect to the peer terminal to store the transmitted/received CM.

Further, when the CM is received by using the portable terminal, the CM manager 102 determines whether the received message is the CM. If it is determined that the message is the CM, the CM manager 102 creates the folder for storing the message and stores the received message and the transmitted message.

Furthermore, if an access right on the stored data is granted, the CM manager 102 stores information regarding a specific folder together with International Mobile Subscriber Identity (IMSI) information of the portable terminal. Thereafter, the CM manager 102 performs an authentication process whenever the folder is accessed to restrict the access to the specific folder.

The storage folder processor 104 of the CM manager 102 creates a folder for storing message data to be transmitted and received between portable terminals, and deletes the created folder when the CM function ends.

The memory 106 includes, for example, a Read Only Memory (ROM), a Random Access Memory (RAM), a flash ROM, and the like. The ROM stores a variety of reference data and a microcode (i.e., code) of a program for controlling the controller 100 and the CM manager 102.

The RAM is a working memory of the controller 100 and stores temporary data that is generated while programs are performed. The flash ROM stores phonebook entries, incoming messages, and outgoing messages.

The input unit 108 includes a plurality of function keys such as numeral key buttons of '0' to '9', a menu button, a cancel (or delete) button, an OK button, a talk button, an end button, an Internet access button, a navigation (or direction) key button, a character input key, and the like. Key input data (e.g., CM transmission), which is input when the user presses the function keys, is provided to the controller 100.

The display unit 110 displays state information, which is generated while the portable terminal operates, numeral characters, moving pictures, still pictures, and the like. The display unit 110 may be a color Liquid Crystal Display (LCD), an Active Mode Organic Light Emitting Diode (AMOLED), and the like. When the display unit 110 may be equipped with a touch input device and applied to a touch input type portable terminal, the display unit 108 may be used as an input device.

The communication unit 112 transmits and receives a Radio Frequency (RF) signal of data that is input and output through an antenna (not illustrated). For example, in a transmitting process, data to be transmitted is subject to a channel-coding process and a spreading process, and then the data is transformed to an RF signal. In a receiving process, the RF signal is received and transformed to a base-band signal, and the base-band signal is subject to a de-spreading process and a channel-decoding process, thereby restoring the data.

Although a function of the CM manager 102 may be performed by the controller 100, the CM function 102 and the controller 100 are separately constructed for exemplary purposes only. Thus, it should be understood that various modifications may be made within the scope of the present invention. For example, functions of the CM manager 102 and the controller 100 may be processed by the controller 100.

An apparatus for providing an improved CM function in a mobile communication system according to an exemplary embodiment of the present invention is described above. Hereinafter, a method for providing an improved CM function by transmitting information for announcing that a CM is transmitted in a message transmission process to enable rapid response processing and by granting an access right on stored data when performing the CM function will be described below by using the apparatus according to the exemplary embodiment of the present invention.

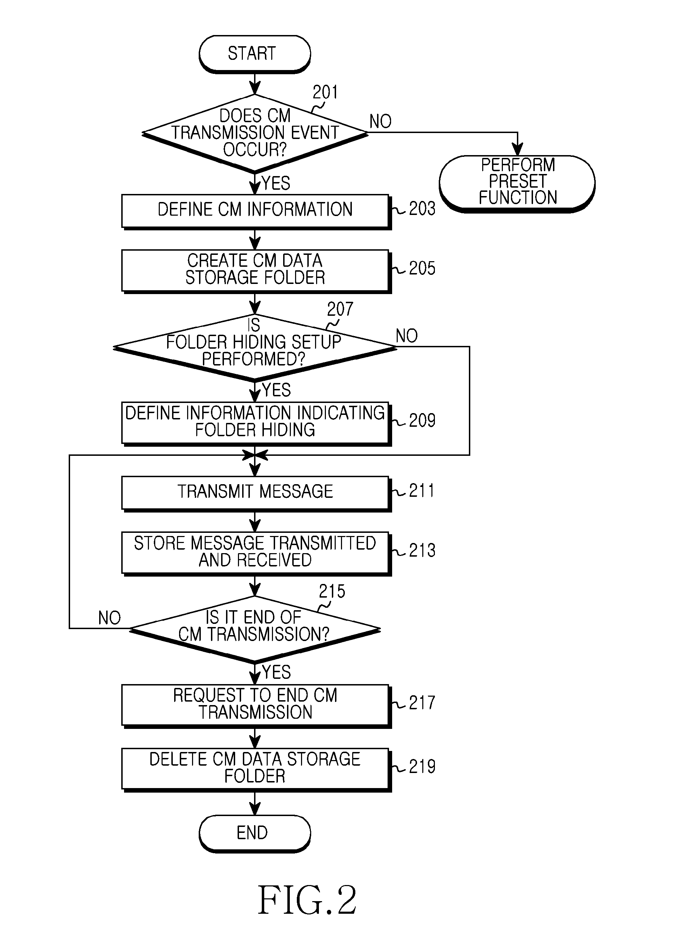

FIG. 2 is a flowchart illustrating a process of performing a CM function in a portable terminal according to an exemplary embodiment of the present invention.

Referring to FIG. 2, the portable terminal determines whether a CM transmission event occurs in step 201. The CM transmission event occurs when a user of the portable terminal requests a user of a recipient terminal to perform a CM service.

If it is determined in step 201 that the CM transmission event does not occur, the portable terminal performs a preset function (e.g., a standby mode).

If it is determined in step 201 that the CM transmission event occurs, the portable terminal generates a message in which CM information is defined in step 203. The CM information is information for announcing to a peer terminal that a message (e.g., a Multimedia Messing Service (MMS) or a Short Messaging Service (SMS)) transmitted by the portable terminal is a message transmitted in a CM transmission mode. By using the CM information to announce the CM mode to the peer terminal, a response may be rapidly received.

Additionally, during the CM mode, the portable terminal may generate a message in which information regarding a folder (e.g., a folder name, a folder image, a folder access restriction setup, and the like) for storing message data exchanged with a peer portable terminal is defined.

In this case, if the portable terminal transmits a multimedia message and operates in the CM mode, the portable terminal may define information for announcing to the peer terminal that the message is a message to be transmitted in the CM transmission mode in "X-Mms-Applic-ID" and "X-Mms-Reply-Applic-ID" parts. Information regarding the folder for storing the message data may be defined in a body part of the multimedia message.

In step 205, the portable terminal creates a CM data storage folder. The CM data storage folder is a folder for storing data to be transmitted and received between the portable terminal and the peer terminal. According to the CM information defined in step 203, the storage folder may be created by the user.

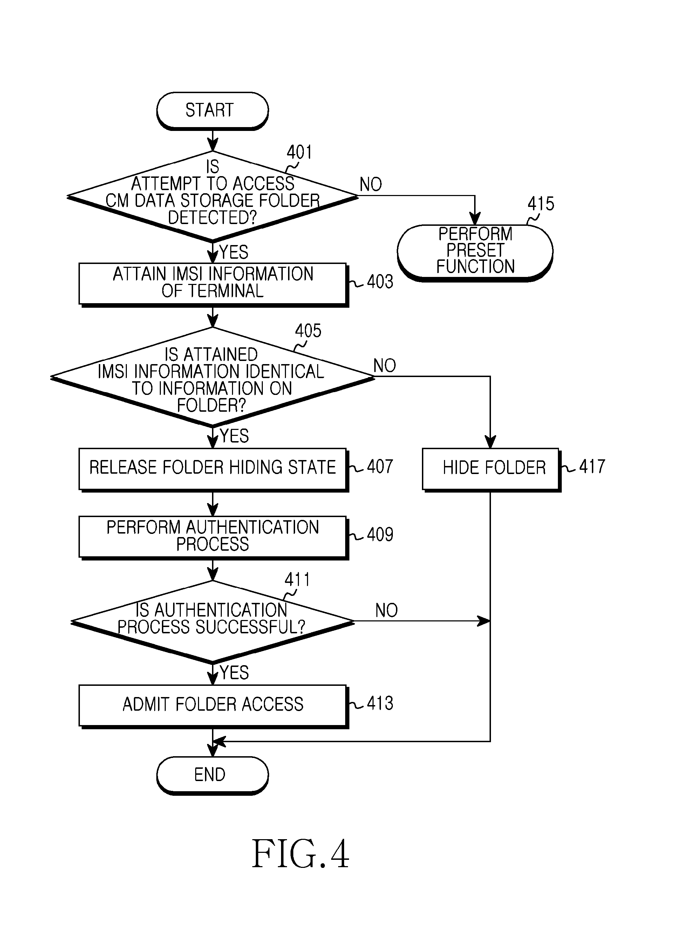

In step 207, the portable terminal determines whether a folder hiding setup is performed. The folder hiding setup is one type of the CM information, and is used to restrict other users' access to the stored data when the CM function is performed. When the user of the portable terminal performs the folder hiding setup, the portable terminal changes the folder for storing the CM data into a hiding state. This process may also be performed in step 203. The process is separately described to explain an operation of accessing a hidden folder. Such a process of accessing the hidden folder will be described below in more detail with reference to FIG. 4.

If it is determined in step 207 that the folder hiding setup is performed, the portable terminal additionally defines folder hiding information in a message in which the CM information is defined in step 209. In step 211, the portable terminal transmits to the peer portable terminal the defined CM information and the message in which the folder hiding information is defined.

If it is determined in step 207 that the folder hiding setup is not performed, the portable terminal transmits the message including the defined CM information to the peer portable terminal in step 211.

After transmitting the message as described above, the portable terminal performs a CM service with respect to the peer portable terminal to store a message transmitted and received in step 213. In this case, the portable terminal may store the message in the CM data storage folder created in step 205.

In step 215, the portable terminal determines whether the end of the CM transmission is detected.

If the end of the CM transmission is not detected in step 215, the procedure returns to step 211.

If the end of CM is detected in step 215, the portable terminal transmits a CM end request to the peer terminal to end the transmission of the CM to the peer terminal in step 217.

The CM end request implies that information for announcing the end of the CM mode is defined in the message to be transmitted to the peer terminal, and thereafter the message in which the information is defined is transmitted to the peer terminal.

In step 219, the portable terminal deletes the CM data storage folder as the CM transmission ends. Then, the procedure ends.

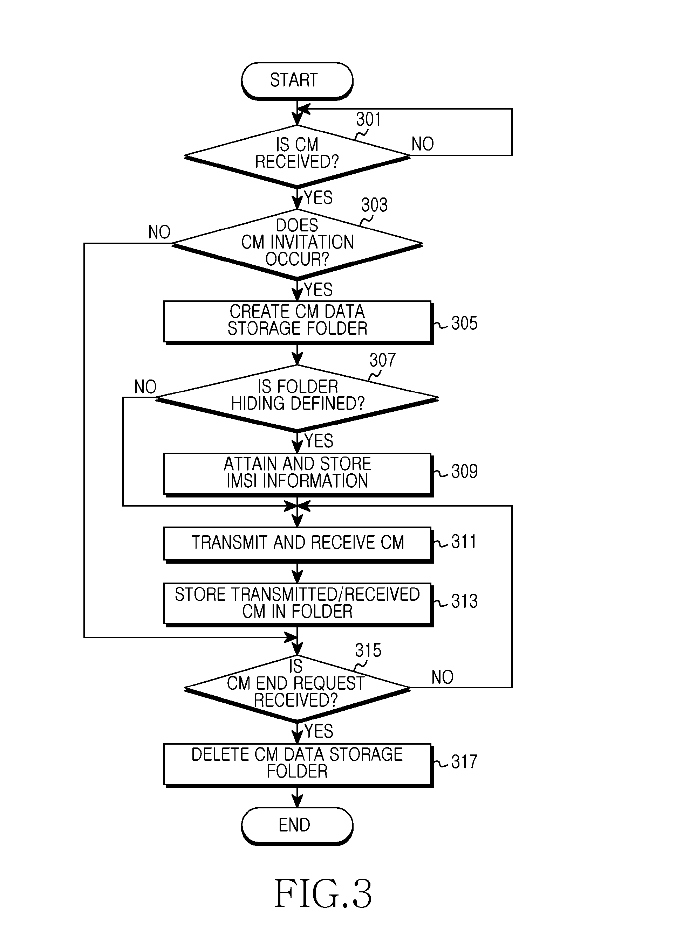

FIG. 3 is a flowchart illustrating a CM reception process in a portable terminal according to an exemplary embodiment of the present invention.

Referring to FIG. 3, the portable terminal determines whether a CM is received in step 301. The CM is a message for performing a CM mode, and may be used to determine whether the received message contains information for announcing that the message is transmitted in the CM mode.

If the CM is not received in step 301, the portable terminal again determines whether a CM is received in step 301.

If the CM is received in step 301, the portable terminal performs a process of determining CM information defined in the received message in step 303. The CM information may indicate CM invitation and end information, CM storage folder information, folder hiding information, and the like.

If it is determined in step 303 that the CM invitation information is defined in the received message, the portable terminal determines storage folder information in the CM information defined in the received message, and thereafter creates a CM data storage folder corresponding to the determined information in step 305.

In step 307, the portable terminal determines whether the folder hiding information is defined in the CM received in step 301. The folder hiding information is defined to prevent stored data from being accessed by other users as the CM function is performed. If a user of the portable terminal performs the folder hiding function, the portable terminal changes a folder for storing data transmitted and received while performing the CM function into a hiding state.

If it is determined in step 307 that the folder hiding information is defined, the portable terminal attains and stores IMSI information from a Subscriber Identity Module (SIM) card of the portable terminal in step 309. The IMSI information of the SIM card is attained to restrict portable terminals which access a folder to be hidden. The folder to be hidden uses the IMSI information as information for admitting access of only a specific portable terminal.

In step 311, the portable terminal transmits and receives the CM with respect to the peer portable terminal. In step 313, the portable terminal stores the transmitted/received data in a specific folder.

In step 315, the portable terminal determines whether a CM end request is received from the peer terminal.

If the CM end request is not received in step 315, the portable terminal again transmits and receives the CM with respect to the peer portable terminal in step 311.

In contrast, if the CM end request is received in step 315, the portable terminal deletes the folder for storing the data transmitted and received with respect to the peer portable terminal in step 317.

Meanwhile, if it is determined in step 303 that the received message does not contain the CM invitation message, the portable terminal again determines whether a CM end request is received from the peer terminal in step 315.

FIG. 4 is a flowchart illustrating a process of accessing a folder in which CM data is stored in a portable terminal according to an exemplary embodiment of the present invention.

Referring to FIG. 4, the portable terminal detects an attempt to access a CM data storage folder in step 401.

If the attempt to access the CM data storage folder is not detected in step 401, the portable terminal performs a preset function (e.g., CM transmission/reception) in step 415.

If the attempt to access the storage folder is detected in step 401, the portable terminal attains IMSI information stored in a SIM card in step 403. In step 405, the portable terminal determines whether the IMSI information attained in step 403 is identical to information regarding the folder.

If it is determined in step 405 that the attained information is different from the information regarding the folder, the portable terminal maintains a hidden state of the folder to restrict access to the folder in step 417.

In contrast, if it is determined in step 405 that the attained information is identical to the information regarding the folder, the portable terminal allows the folder to be released from the folder hiding state in step 407. In step 409, the portable terminal performs an authentication process.

The authentication process performed in step 409 may be a process of determining whether folder access is admitted. The portable terminal may perform the authentication process by determining a Personal Identification Number (PIN) number.

If the authentication process is successful in step 411, the portable terminal admits access to the folder in step 413.

On the other hand, if the authentication process is not successful in step 411, the portable terminal denies access to the folder, and the procedure ends.

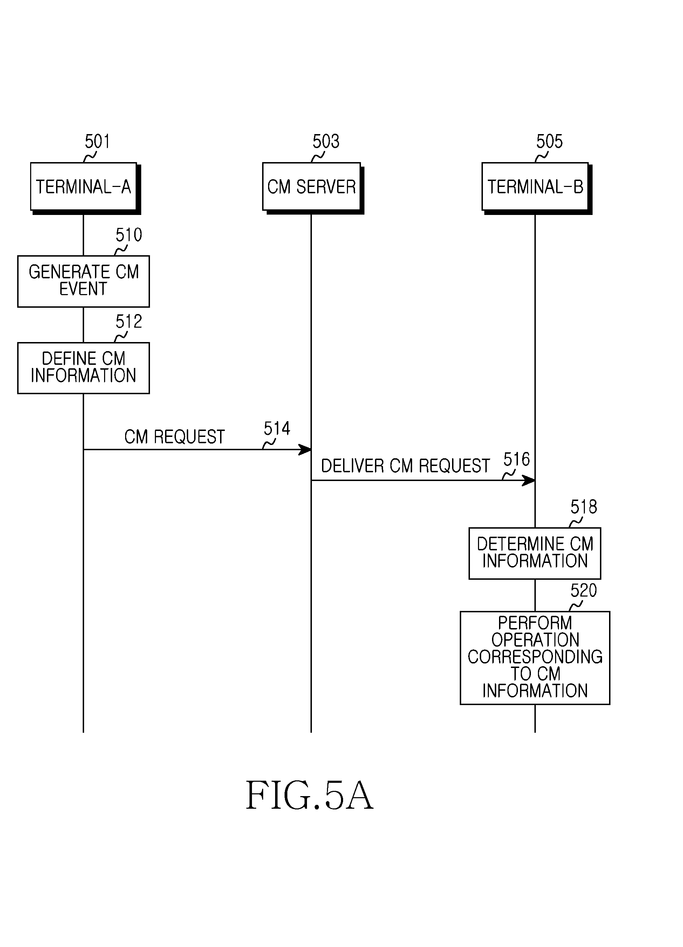

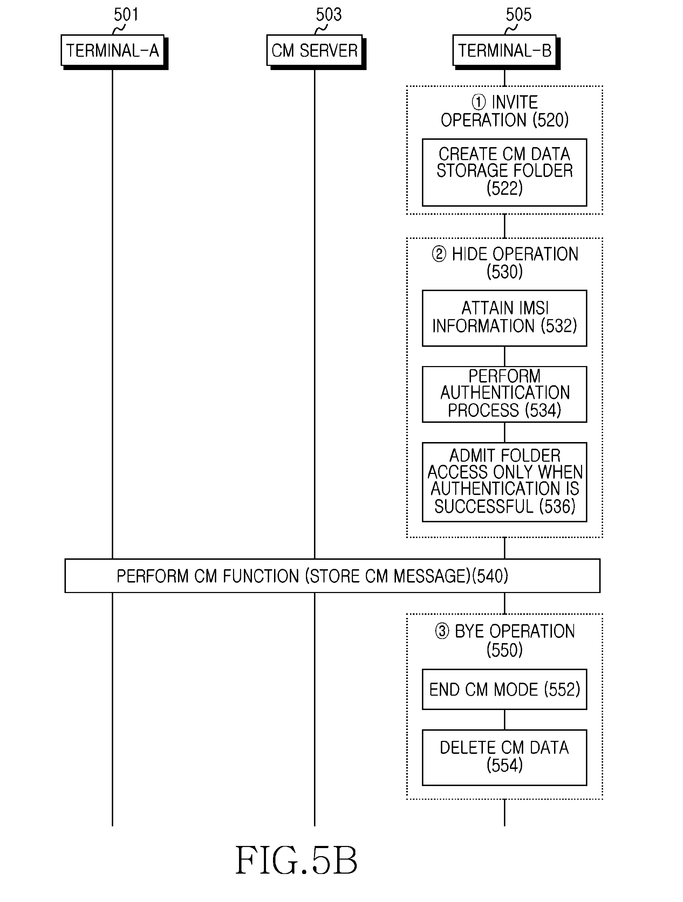

FIGs. 5A and 5B illustrate a process of providing a CM service in a mobile communication system according to an exemplary embodiment of the present invention.

Referring to FIGs. 5A and 5B, the mobile communication system includes a terminal-A 501 for transmitting a CM, a terminal-B 505 for receiving the CM, and a CM server 503 for providing the CM service to the two terminals.

FIG. 5A illustrates a process of performing a CM service in a mobile communication system according to an exemplary embodiment of the present invention.

Referring to FIG. 5A, when a CM event occurs in the terminal-A 501 which intends to transmit the CM in step 510, the terminal-A 501 generates a message in which CM information is defined in step 512. The CM information includes information for announcing that a message (e.g., an MMS or an SMS) transmitted by the portable terminal is a message transmitted in a CM mode to a peer portable terminal and information regarding a folder (e.g., a folder name, a folder image, a folder access restriction setup, and the like) for storing message data to be exchanged with the peer portable terminal.

Thereafter, the terminal-A 501 transmits the generated CM to the peer terminal, i.e., the terminal-B 505, via the CM server 503 to transmit a CM service request (i.e., CM information) in step 514. That is, upon receiving the CM request from the terminal-A 501, the CM server 503 delivers the CM request to the peer terminal, i.e., the terminal-B 505, in step 516.

Upon receiving the CM request, the terminal-B 505 determines information included in the received message to determine whether the message is the CM. If the terminal-B 505 determines that the CM is received, the terminal-B 505 determines the CM information in step 518, and performs an operation corresponding to the determined information in step 520 as illustrated in FIG. 5B.

FIG. 5B illustrates a process of performing an operation corresponding to CM information in a mobile communication system according to an exemplary embodiment of the present invention.

Referring to FIG. 5B, examples of the operation corresponding to the CM information include a CM function invitation (i.e., INVITE operation) in step 520, a folder access restriction (i.e., HIDE operation) in step 530, and a CM function end (i.e., BYE operation) in step 550.

When the terminal-B 505 which receives the CM request detects the CM function invitation from the received request in step 520, the terminal-B 505 creates a CM storage folder by determining information regarding a folder (e.g., a folder name, a folder image, a folder access restriction setup, and the like) for storing message data exchanged with a peer portable terminal in step 522.

Thereafter, the terminal-B 505 performs a CM function with respect to the terminal-A 501, and stores the message data transmitted and received with respect to the terminal-A 501 in the created folder in step 540.

If the terminal-B 505 receives the CM request and then detects a request for restricting folder access from the received request in step 530, the terminal-B 505 attains IMSI information from a SIM card included in the terminal-B 505 in step 532, and then determines whether the attained information is identical to pre-stored information to determine whether the folder access is admitted to the terminal-B 505.

If it is determined that the folder access is admitted, the terminal-B 505 performs an authentication process in step 534 to access to the folder. Accordingly, in step 536, the terminal-B 505 is admitted to access the folder only when the authentication is successful.

The request for restricting access to the folder may be performed before the CM function ends, and may be performed when using the CM function.

Upon receiving the CM request, if the terminal-B 505 detects a CM function end request from the received request in step 550, the terminal-B 505 ends the CM function with respect to the terminal-A 501 in step 552. Thereafter, the terminal-B 505 deletes the storage folder created to store the message data transmitted and received with respect to the terminal-A 501 in step 554.

According to exemplary embodiments of the present invention, an apparatus and method for providing an improved CM function are provided. By transmitting information for announcing that a CM is transmitted in a message transmission process to enable rapid response processing and by granting an access right on stored data when performing the CM function, a rapid response can be achieved and thus the same effect as a real-time conversation can be provided. Further, messages can be prevented from being accessed by other users.

While the invention has been shown and described with reference to certain exemplary embodiments thereof, it will be understood by those skilled in the art that various changes in form and details may be made therein without departing from the spirit and scope of the present invention as defined by the appended claims and their equivalents.

## Claims

1. An apparatus for transmitting a Conversational Message (CM) in a portable terminal, the apparatus comprising:
a CM manager (102) for defining information indicating a start and end of a CM function and information regarding a folder for storing message data exchanged with a peer portable terminal in a message to be transmitted, and for transmitting the defined message to the peer terminal.

2. The apparatus of claim 1, wherein the CM manager (102) manages the folder access restriction setup to prevent the folder, for storing messages transmitted and received when performing the CM function, from being accessed by other users.

3. An apparatus for receiving a Conversational Message (CM) in a portable terminal, the apparatus comprising a CM manager (102) adapted to create a folder for storing the CM by analyzing CM information included in a received message, and for storing the CM transmitted and received.

4. The apparatus of claim 3, wherein the CM manager (102) creates a folder for storing the CM, and if access to the folder is restricted, attains information regarding the portable terminal to determine whether folder access is necessary and activates a function of hiding the folder.

5. The apparatus of claim 4, wherein the CM manager (102) restricts the folder access, and if the folder access is detected, disables a function of hiding the folder when pre-stored information regarding the portable terminal is identical to information regarding a portable terminal which intends to access the folder.

6. The apparatus of claim 5, wherein, if the pre-stored information and the information which intends to access the folder are identical, the CM manager (102) disables the function of hiding the folder, and admits access to the folder by performing an authentication process.

7. The apparatus of claim 3, wherein the CM manager (102) ends the CM function and deletes the created folder.

8. A method for transmitting a Conversational Message (CM) in a portable terminal, the method comprising:
defining information indicating a start and end of a CM function and information regarding a folder for storing message data exchanged with a peer portable terminal in a message to be transmitted; and
transmitting the defined message to the peer terminal.

9. The method of claim 8, wherein the folder access restriction setup prevents a folder, for storing a message transmitted and received when performing the CM function, from being accessed by other users.

10. A method for receiving a Conversational Message (CM) in a portable terminal, the method comprising:
creating a folder for storing the CM by analyzing CM information included in a received message; and
storing the CM transmitted and received in the created folder.

11. The method of claim 10, further comprising:
creating a folder for storing the CM; and
if access to the folder is restricted, attaining information regarding the portable terminal to determine whether folder access is necessary and activating a function of hiding the folder.

12. The method of claim 11, further comprising:
restricting the folder access, and determining whether pre-stored information regarding the portable terminal is identical to information regarding a portable terminal which intends to access the folder; and
if the determination result shows that the pre-stored information and the information which intends to access the folder are identical, disabling a function of hiding the folder.

13. The method of claim 12, further comprising:
if the pre-stored information and the information which intends to access the folder are identical, processing to disable the function of hiding the folder; and
admitting access to the folder by performing an authentication process.

14. The method of claim 10, further comprising:
ending the CM function being performed and deleting the created folder.
